(19) Europäisches Patentamt / European Patent Office / Office européen des brevets

(11) **EP 1 663 674 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(21) Anmeldenummer: **04766690.4**

(22) Anmeldetag: **02.09.2004**

(51) Int Cl.:
***B60C 23/04*** *(2006.01)*

(86) Internationale Anmeldenummer:
**PCT/EP2004/052019**

(87) Internationale Veröffentlichungsnummer:
**WO 2005/025899 (24.03.2005 Gazette 2005/12)**

(54) **ZUORDNUNGSVERFAHREN FÜR EIN KOMBINIERTES REIFENDRUCKÜBERWACHUNGSSYSTEM IN KRAFTFAHRZEUGEN**

ALLOCATION METHOD FOR A COMBINED TYRE PRESSURE MONITORING SYSTEM IN MOTOR VEHICLES

PROCEDE D'AFFECTATION POUR UN SYSTEME COMBINE DE SURVEILLANCE DE LA PRESSION DES PNEUS DANS DES VEHICULES AUTOMOBILES

(84) Benannte Vertragsstaaten:
**DE FR IT**

(30) Priorität: **11.09.2003 DE 10342227**

(43) Veröffentlichungstag der Anmeldung:
**07.06.2006 Patentblatt 2006/23**

(73) Patentinhaber: **Continental Teves AG & Co. oHG 60488 Frankfurt am Main (DE)**

(72) Erfinder:
• **KOUKES, Vladimir 64297 Darmstadt (DE)**
• **KÖBE, Andreas 64625 Bensheim (DE)**
• **STÖLZL, Stefan 69469 Weinheim (DE)**
• **LAUER, Peter 61118 Bad Vilbel (DE)**

(56) Entgegenhaltungen:
WO-A-2004/058517    DE-A- 10 152 338
DE-A- 10 238 571

**Beschreibung**

Die Erfindung betrifft ein Zuordnungsverfahren für ein kombiniertes Reifendrucküberwachungssystem in Kraftfahrzeugen gemäß Oberbegriff von Anspruch 1, sowie ein Computerprogrammprodukt gemäß Anspruch 9.

In modernen Kraftfahrzeugen finden vermehrt Einrichtungen Verwendung, welche die aktive oder die passive Sicherheit erhöhen. Wie die Erfahrung zeigt, entstehen viele Unfälle durch defekte Fahrzeugreifen. Eine Vielzahl dieser Reifendefekte ist hierbei auf einen falschen Reifenluftdruck bzw. auf einen schleichenden Reifenluftdruckverlust zurückzuführen. Daher ist eine zuverlässige Überwachung des Reifenluftdrucks für die Sicherheit des Fahrzeuges von großer Bedeutung.

Bisher sind zwei Arten von Reifendrucküberwachungssystemen bekannt. Zum einen sind sogenannte direkt messende Reifendrucküberwachungssysteme (TPMS: Tire Pressure Monitoring System), welche z. B. in der DE 199 26 616 C2 oder in der DE 199 38 431 C2 beschrieben sind, und sogenannte indirekt messende Reifendrucküberwachungssysteme (DDS: Deflection Detection System), beschrieben z. B. in der DE 100 58 140 A1, bekannt.

Das direkt messende Reifendrucküberwachungssystem (TPMS) misst mittels Druckmessmodule den jeweiligen Reifenluftdruck direkt in dem betreffenden Reifen, wodurch alle Räder unabhängig voneinander überwacht werden. Der gemessene Reifenluftdruck wird allein, oder in Verbindung mit anderen Messwerten (z. B. Reifentemperatur) mittels einer mit dem Druckmessmodul verbundenen Sendeeinheit an eine oder mehrere am Fahrzeug angeordnete Empfangseinheit/en gesendet. Hierbei weist jede Sendeeinheit eine individuelle Kennung auf, welche zusammen mit dem gemessenen Reifenluftdruck und eventuellen anderen Messwerten gesendet wird. Die ein- oder mehrfach vorhandene Empfangseinrichtung leitet die empfangenen Daten (Messwerte und Kennungen) an eine Auswerteeinheit, welche bei einem Reifendruckverlust eine Warnung an den Fahrzeugführer ausgibt, weiter. Durch die direkte Messung des Reifenluftdrucks erkennt das direkt messende Reifendrucküberwachungssystem (TPMS) einen Reifenluftdruckverlust schon sehr frühzeitig.

Nachteilig an den bekannten direkt messenden Reifendrucküberwachungssystemen ist, dass zum einen die Zuverlässigkeit aufgrund der üblicherweise nicht redundanten Druckmessmodule sehr eingeschränkt ist und zum anderen für die Erkennung, welcher Reifen (z. B. Reifen vorne links) einen Reifenluftdruckverlust aufweist, ein hoher Kostenaufwand notwendig ist, da hierzu in der Regel für eine sichere Zuordnung der Reifen zu den Einbauorten (z. B. vorne links) mehrere Empfangseinrichtungen erforderlich sind.

Das indirekt messende Reifendrucküberwachungssystem (DDS) basiert auf der Messung von Raddrehzahlen. Die Raddrehzahlzunahme ist dabei ein Maß für den Reifenluftdruck, da ein Reifen mit einem von dem Solldruck (z. B. 2,0 bar) abweichenden niedrigeren Reifenluftdruck (z. B. 1,0 bar) einen kleineren dynamischen Abrollumfang aufweist. Aufgrund dieser Drehzahldifferenz erkennt das indirekt messende Reifendrucküberwachungssystem (DDS) einen Reifenluftdruckverlust. Zur Bestimmung der Raddrehzahlen werden üblicherweise die bereits in einem Fahrzeug mit einem Anti-Blockier-System (ABS) verwendeten Radsensoren benutzt. Diese Radsensoren bieten den Vorteil, dass sie auf eventuelle Ausfälle überwacht werden oder redundant ausgelegt sind, wodurch ein Reifenluftdruckverlust mit einer hohen Zuverlässigkeit erkannt wird. Da der Einbauort (z. B. vorne links) der Radsensoren dem indirekt messenden Reifendrucküberwachungssystem (DDS) bekannt ist, ist eine einfache Zuordnung eines Rades mit einem Reifenluftdruckverlust zu seinem Einbauort gegeben. Weiterhin ist dieses System sehr kostengünstig, da zumindest bei Fahrzeugen mit ABS die notwendigen Radsensoren bereits verbaut sind.

Nachteilig an den bekannten indirekten Reifendrucküberwachungssystemen (DDS) ist, dass ein gleichzeitig auftretender Reifenluftdruckverlust an allen Rädern nicht erkannt werden kann, da bei einem gleichzeitigen Reifenluftdruckverlust keine Drehzahldifferenz zwischen den Rädern erkennbar ist.

Ferner gibt es kombinierte Reifendrucküberwachungssysteme, welche ein direkt messendes Reifendrucküberwachungssystem mit einem indirekt messenden Reifendrucküberwachungssystem verbinden. Ein solches kombiniertes Reifendrucküberwachungssystem ist in der gattungsgemäßen DE 101 52 338 A1 beschrieben. Das bekannte kombinierte Reifendrucküberwachungssystem verzichtet aus Kostengründen auf die Berücksichtigung der individuellen Kennung, welche üblicherweise mit dem gemessenen Reifenluftdruck und eventuellen anderen Messwerten von der mit dem Druckmessmodul verbundenen Sendeeinrichtung an die Empfangseinrichtung gesendet wird. Nachteilig hierbei ist, dass wenn zwei oder mehrere Fahrzeuge nebeneinander stehen, die Auswerteeinrichtung nicht erkennen kann, welcher gesendete Reifenluftdruck zu dem eigenen Fahrzeug gehört.

Weiterhin ist aus dem nicht vor veröffentlichten Dokument WO 2004/058517, welches nach Art. 54(3) EPÜ nur zur Beurteilung der Neuheit herauzuziehen ist, ein Zuordnungsverfahren bekannt welches zur Positionsbestimmung Nahrscheinlichkeitswerte verwendet.

Es ist daher Aufgabe der Erfindung, ein Zuordnungsverfahren für ein kombiniertes Reifendrucküberwachungssystem bereitzustellen, welches eine kostengünstige und sichere Zuordnung der Fahrzeugräder zu den betreffenden Einbauorten ermöglicht.

Diese Aufgabe wird erfindungsgemäß durch das Zuordnungsverfahren nach Anspruch 1 gelöst.

In einer bevorzugten Ausführungsform des erfindungsgemäßen Zuordnungsverfahrens wird für jede mögliche Kombination eines Druckmessmoduls mit einer Kennung IDx und einem Einbauort y ein Zähler C_IDx_y bereitgestellt.

In einer weiteren bevorzugten Ausführungsform des Zuordnungsverfahrens wird für jedes Druckmessmodul mit einer Kennung IDx ein Kennungszähler C_IDx initialisiert.

Weitere Merkmale und Vorteile des erfindungsgemäßen Zuordnungsverfahrens gehen aus den Unteransprüchen hervor. Das erfindungsgemäße Zuordnungsverfahren wird nachfolgend anhand eines Ausführungsbeispiels beschrieben.

Das kombinierte Reifendrucküberwachungssystem basiert hierbei auf einem direkt messenden Reifendrucküberwachungssystem (TPMS) und auf einem indirekt messenden Reifendrucküberwachungssystem (DDS).

Das direkt messende Reifendrucküberwachungssystem (TPMS) sendet mittels einer im oder am Fahrzeugrad angeordneten Sendeeinrichtung radindividuellen Reifenluftdrücke zusammen mit einer individuellen Kennung, im folgenden IDx genannt, an eine mit einer Auswerteeinrichtung verbundene Empfangseinrichtung. Die radindividuellen Reifenluftdrücke werden hierbei durch sogenannte Druckmessmodule erfasst. Somit empfängt die Auswerteeinrichtung von jedem Fahrzeugrad einen individuellen Reifenluftdruck und eine individuelle Kennung (IDx). Das erfindungsgemäße direkt messende Reifendrucküberwachungssystem weist jeweils ein Druckmessmodul pro Rad auf. Sind weniger Druckmessmodule als Räder vorhanden, so können in diesem Fall die Reifenluftdrücke der übrigen Räder mit Hilfe des weiter unten beschriebenen indirekt messenden Reifendrucküberwachungsverfahren ermittelt werden.

Das indirekt messende Reifendrucküberwachungssystem (DDS) erkennt aus Raddrehzahlen, welche mittels Radsensoren gemessen werden, einen Reifenluftdruckverlust. Üblicherweise werden die Radssensoren, welche bei einem Fahrzeug mit ABS bereits zur Bestimmung des Drehverhaltens der Räder benutzt werden, auch für das indirekt messende Reifendrucküberwachungssystem (DDS) verwendet. Die Radsensoren sind hierbei schon einem Einbauort zugeordnet, z. B. Radsensor am Rad vorne links. Hierdurch ist dem indirekt messenden Reifendrucküberwachungssystem (DDS) ebenfalls bekannt, an welchem Einbauort ein Reifenluftdruckverlust ermittelt wird.

Das direkt messende Reifendrucküberwachungssystem (TPMS) erkennt, wenn sich mindestens ein Reifenluftdruck ändert. Diese Änderung des mindestens einen Reifenluftdrucks wird auch von dem indirekt messenden Reifendrucküberwachungssystem (DDS) erkannt. Die Informationen von beiden Systemen werden statistisch verarbeitet, um eine Zuordnung der IDx (vom TPMS) zu den Radpositionen (vom DDS) zu ermitteln.

Zur Erkennung eines Reifenluftdruckverlustes werden Schwellen definiert, bei deren Unterschreitung das direkt messende Reifendrucküberwachungssystem (TPMS) einen Reifenluftdruckverlust erkennt. Beispielsweise wird von einem normalen Reifenluftdruck von 2,0 bar ausgegangen. Als Schwelle wird beispielsweise ein Reifenluftdruck von 1,5 bar definiert. Liefert nun ein oder mehrere Druckmessmodul/e einen Reifenluftdruck der unterhalb der Schwelle von 1,5 bar liegt, so schließt die Auswerteeinrichtung auf einen Reifenluftdruckverlust. Nun wird überprüft, ob das indirekt messende Reifendrucküberwachungssystem (DDS) den Einbauort der betroffenen Räder erkennt. Hierzu wird für jede mögliche Kombination der individuellen Kennung (IDx) der Druckmessmodule und der Einbauorte ein Zähler C initialisiert. Bei vier Einbauorten y (VL: vorne links; VR: vorne rechts; HL: hinten links; HR: hinten rechts) und vier Druckmessmodulen IDx (ID1: Kennung erstes Druckmessmodul; ID2: Kennung zweites Druckmessmodul; ID3: Kennung drittes Druckmessmodul; ID4: Kennung viertes Druckmessmodul) ergeben sich somit insgesamt 16 Zähler C_IDx_y. Beispielsweise bedeutet C_ID1_VL, das es sich um den Zähler der Kennung ID1 in Kombination mit dem Rad vorne links handelt. Weiterhin werden noch vier Kennungszähler C_IDx (x: 1, 2, 3, 4) bereitgestellt, welche ermitteln, wie oft von einem Druckmessmodul mit der zugehörigen Kennung (IDx) eine Druckänderung geliefert wird.

Liefert beispielsweise das Druckmessmodul mit der Kennung ID1 einen Reifenluftdruckverlust und das indirekt messende Reifendrucküberwachungssystem (DDS) erkennt z. B. an dem Einbauort vorne links (VL) ebenfalls einen Reifenluftdruckverlust, so wird der Zähler C_ID1_VL um einen bestimmten Wert (z. B. "1") erhöht. Weiterhin wird auch der Kennungszähler C_ID1 um einen bestimmten Wert (z. B. "1") erhöht. Wenn zwei Druckmessmodule Druckänderungen anzeigen (z. B. ID1 und ID2) und das indirekt messende Reifendrucküberwachungssystem (DDS) eine Druckänderung an zwei Rädern erkennt (z. B. VL und VR), dann werden die Zähler für alle in diesem Fall möglichen Kombinationen um "0,5" hochgezählt (in unserem Beispiel C_ID1_VL, C_ID1_VR, C_ID2_VL, C_ID2_VR). Weiterhin werden auch alle möglichen Kombinationen (C_ID3_HL, C_ID3_HR, C_ID4_HL, C_ID4_HR) der verbleibenden Kennungen (ID3 und ID4) mit den verbleibenden Einbauorten (HR und HL) um "0,5" erhöht, da sich diese Kombinationen zwangsläufig ergeben müssen, wenn die Kennungen ID1 und ID2 den Einbauorten VL und VR zugeordnet werden. Des weiteren werden alle Kennungszähler (C_ID1, C_ID2, C_ID3 und C_ID4) ebenfalls jeweils um "1" erhöht.

Wenn drei Druckmessmodule eine Druckänderung zeigen (z. B. ID1, ID2 und ID3) und das indirekt messende Reifendrucküberwachungssystem (DDS) drei Einbauorte (z. B. VL, VR und HL) erkennt an denen eine Druckänderung vorliegt, dann wird hierdurch der Einbauort des vierten Rades eindeutig bestimmt. In dem Beispiel zeigt das Druckmessmodul mit der Kennung ID4 keine Druckänderung und an dem Einbauort HR wurde keine Druckänderung festgestellt. Somit wird der Zähler C_ID4_HR für diese Kombination sowie der Kennungszähler C_ID4 jeweils um "1" hochgezählt.

Wenn einer (oder mehrere) von den Kennungszählern (C_ID1, C_ID2, C_ID3 oder C_ID4) ein vorbestimmten maximalen Wert C_IDmax erreicht bzw. überschreitet (z. B. C_ID1 > C_IDmax), dann werden vier Wahrscheinlichkeitswerte W_ID1_y (y: VL, VR, HL, HR) für diese Kennung ID1 kalkuliert. In unserem Beispiel werden folgende Wahrscheinlichkeitswerte berechnet:

$$W\_ID1\_VL = \frac{C\_ID1\_VL}{C\_ID1};$$

$$W\_ID1\_VR = \frac{C\_ID1\_VR}{C\_ID1};$$

$$W\_ID1\_HL = \frac{C\_ID1\_HL}{C\_ID1};$$

$$W\_ID1\_HR = \frac{C\_ID1\_HR}{C\_ID1}$$

Die Zuweisung einer Kennung (IDx) zu einem Einbauort y erfolgt dann, wenn eine Wahrscheinlichkeit W_IDx_y größer als eine Wahrscheinlichkeitsschwelle Wmax, und deutlich größer als alle anderen berechneten Wahrscheinlichkeiten ist. Es ergeben sich zum Beispiel folgende Wahrscheinlichkeiten bzw. Abhängigkeiten:

```
W_ID1_VL > Wmax

W_ID1_VL >> W_ID1_VR

W_ID1_VL >> W_ID1_HL
```

und

```
W_ID1_VL >> W_ID1_HR
```

Somit erfolgt eine Zuordnung des Druckmessmoduls mit der Kennung ID1 zu dem Einbauort vorne links (VL).

Die in dem erfindungsgemäßen Zuordnungsverfahren genannten Zähler (C_IDx und C_IDx_y) stellen nur eine Ausführungsform zur Ermittlung der benötigten Wahrscheinlichkeitswerte M_IDx_y dar. Es können selbstverständlich auch andere bekannte Methoden wie z. B. setzen einer "Flagge" (Flag) etc. angewandt werden um eine Häufigkeitsverteilung zwischen den Druckmessmodulen mit den Kennungen IDx und den Einbauorten y zu bestimmen. Weiterhin müssen auch nicht zwangsläufig 16 Zähler C_IDx_y bereitgestellt werden. Es genügt auch, allerdings mit einer etwas niedrigeren Erkennungssicherheit als bei der genannten Ausführungsform, nur 12 Zähler C_IDx_y zu betrachten, wobei dann nur drei Druckmessmodule ihren Einbauorten zugeordnet werden. Das vierte Druckmodule würde in einem solchen Fall automatisch dem verbleibenden Einbauort zugeordnet werden.

**Patentansprüche**

1. Zuordnungsverfahren für ein kombiniertes Reifendrucküberwachungssystem in Kraftfahrzeugen, welches zumindest teilweise mit Druckmessmodulen ausgestattete Räder mit Luftreifen umfasst, wobei jedes Druckmessmodul einen Reifenluftdruck oder einen vom Reifenluftdruck abhängigen Wert erfasst, und diesen mittels einer mit dem jeweiligen Druckmessmodul verbundenen Sendeeinrichtung zusammen mit einer dem jeweiligen Druckmessmodul zugeordneten individuellen Kennung (IDx) an eine mit einer Auswerteeinrichtung verbundenen Empfangseinrichtung sendet, und wobei an die Auswerteeinrichtung mittels Raddrehzahlsensoren erfasste Signale über die Raddrehzahl eines jeden Rades übermittelt werden, wobei die Einbauorte y (VL: vorne links, VR: vorne rechts, HL: hinten links, HR: hinten rechts) der Räder am Fahrzeug der Auswerteeinrichtung bekannt sind, **dadurch gekennzeichnet, dass** das Zuordnungsverfahren unter Berücksichtigung von ermittelten Wahrscheinlichkeitswerten W_IDx_y durchgeführt wird, wobei die Wahrscheinlichkeitswerte W_IDx_y eine Häufigkeitsverteilung beschreiben, welche angibt, wie oft Druckmessmodule mit den Kennungen IDx als zu den Einbauorten y zugehörig erkannt werden, wobei durch das Zuordnungsverfahren ein Druckmessmodul mit einer Kennung IDx einem Einbauort y zugeordnet wird, wenn der Wahrscheinlichkeitswert W_IDx_y des Druckmessmoduls mit der Kennung IDx größer als eine Wahrscheinlichkeitsschwelle W_max und deutlich größer als alle anderen berechneten Wahrscheinlichkeitswerte ist.

2. Zuordnungsverfahren nach Anspruch 1, **dadurch gekennzeichnet, dass** die Wahrscheinlichkeitswerte W_IDx_y berechnet werden, wenn ein Kennungszähler C_IDx einen vorbestimmten maximalen Wert C_IDmax erreicht bzw. überschritten hat.

3. Zuordnungsverfahren nach mindestens einem der Ansprüche 1 bis 2, **dadurch gekennzeichnet, dass** der Kennungszähler C_IDx um einen festgelegten Wert erhöht wird, wenn ein Druckmessmodul mit der zugehörigen Kennung IDx einen Reifenluftdruck erfasst, welcher eine Schwelle unterschreitet, bei deren Unterschreitung auf einen Reifenluftdruckverlust geschlossen wird.

4. Zuordnungsverfahren nach mindestens einem der Ansprüche 1 bis 2, **dadurch gekennzeichnet, dass** ein Zählerstand eines Zählers C_IDx_y, welcher eine Häufigkeit beschreibt wie oft ein Druckmessmodul mit der Kennung IDx einem Einbauort y zugeordnet wird.

5. Zuordnungsverfahren nach Anspruch 4, **dadurch gekennzeichnet, dass** der Zählerstand des Zählers C_IDx_y um einen ersten festgelegten Wert erhöht wird, wenn genau ein Druckmessmodul mit der Kennung IDx genau einem Einbauort y zugeordnet wird.

6. Zuordnungsverfahren nach Anspruch 4, **dadurch gekennzeichnet, dass** die Zählerstände mehrerer Zähler C_IDx_y um einen zweiten festgelegten Wert erhöht werden, wenn mehrere Druckmessmodule mit den jeweiligen Kennungen IDx mehreren Einbauorten y zugeordnet werden.

7. Zuordnungsverfahren nach mindestens einem der Ansprüche 1 bis 6, **dadurch gekennzeichnet, dass** der Einbauort y **dadurch** erkannt wird, dass sich mindestens ein Rad schneller dreht als mindestens ein anderes Rad.

8. Zuordnungsverfahren nach mindestens einem der Ansprüche 1 bis 7, **dadurch gekennzeichnet, dass** die Wahrscheinlichkeitswerte W_IDx_y im wesentlichen durch Quotientenbildung aus den Zählern C_IDx_y und den Kennungszählern IDx gebildet werden.

9. Computerprogrammprodukt, **dadurch gekennzeichnet, dass** dieses einen Algorithmus definiert, welcher ein Zuordnungsverfahren gemäß mindestens einem der Ansprüche 1 bis 8 umfasst.

**Claims**

1. Allocation method for a combined tyre pressure monitoring system in motor vehicles, which comprises wheels which are at least partially provided with pressure measurement modules and have pneumatic tyres, each pressure measurement module detecting a tyre air pressure or a value dependent on the tyre air pressure and transmitting said pressure or value, together with an individual identifier (IDx) allocated to the respective pressure measurement module, to a receiving device connected to an evaluation device using a transmitting device connected to the respective pressure measurement module, and signals relating to the wheel speed of each wheel which are detected using wheel speed sensors being transmitted to the evaluation device, the installation locations y (FL: front left, FR: front right, RL: rear left, RR: rear right) of the wheels on the vehicle being known to the evaluation device, **characterized in that** the allocation method is carried out taking into account probability values W_IDx_y which have been determined, the probability values W_IDx_y describing a frequency distribution which indicates how often pressure measurement modules with the identifiers IDx are identified as belonging to the installation locations y, and the allocation method allocating a pressure measurement module with an identifier IDx to an installation location y if the probability value W_IDx_y for the pressure measurement module with the identifier IDx is greater than a probability threshold W_max and is considerably greater than all other probability values which have been calculated.

2. Allocation method according to Claim 1, **characterized in that** the probability values W_IDx_y are calculated if an identifier counter C_IDx has reached or exceeded a predetermined maximum value C_IDmax.

3. Allocation method according to at least one of Claims 1 and 2, **characterized in that** the identifier counter C_IDx is increased by a defined value if a pressure measurement module with the associated identifier IDx detects a tyre air pressure which undershoots a threshold, a tyre air pressure loss being inferred when said threshold is undershot.

4. Allocation method according to at least one of Claims 1 and 2, **characterized in that** a counter reading of a counter C_IDx_y describes a frequency of how often a pressure measurement module with the identifier IDx is allocated to an installation location y.

5. Allocation method according to Claim 4, **characterized in that** the counter reading of the counter C_IDx_y is increased by a first defined value if precisely one pressure measurement module with the identifier IDx is allocated to precisely one installation location y.

6. Allocation method according to Claim 4, **characterized in that** the counter readings of a plurality of counters C_IDx_y are increased by a second defined value if a plurality of pressure measurement modules with the respective identifiers IDx are allocated to a plurality of installation locations y.

7. Allocation method according to at least one of Claims 1 to 6, **characterized in that** the installation location y is detected by at least one wheel rotating faster than at least one other wheel.

8. Allocation method according to at least one of Claims 1 to 7, **characterized in that** the probability values W_IDx_y are essentially formed by forming the quotient of the counters C_IDx_y and the identifier counters IDx.

9. Computer program product, **characterized in that** it defines an algorithm which comprises an allocation method according to at least one of Claims 1 to 8.

**Revendications**

1. Procédé d'attribution dans un système combiné de surveillance de la pression des bandages de roue de véhicules automobiles qui comprend des roues dotées de bandages pneumatiques de roue dont au moins certains sont équipés de modules de mesure de pression,
chaque module de mesure de pression détectant une pression d'air du bandage de roue ou une valeur qui dépend de la pression d'air du bandage de roue et l'envoyant au moyen d'un dispositif d'émission relié au module de mesure de pression concerné, en même temps qu'une caractéristique individuelle (IDx) associée au module de mesure de pression concerné, à un dispositif de réception relié à un dispositif d'évaluation,
des signaux de détection de la vitesse de rotation de chaque roue, délivrés par des détecteurs de vitesse de rotation des roues étant transmis au dispositif d'évaluation,
les emplacements y de montage des roues (VL : avant gauche, VR : avant droit, HL : arrière gauche, HR : arrière droit) sur le véhicule étant connus du dispositif d'évaluation,
**caractérisé en ce que**
le procédé d'attribution est exécuté en tenant compte de valeurs de probabilité W_IDx_y déterminées, les valeurs de probabilité W_IDx_y décrivant une répartition de fréquence qui indique à quelle fréquence les modules de mesure de pression qui présentent la caractéristique IDx sont détectés comme appartenant aux emplacements de montage y,
le procédé d'attribution attribuant un module de mesure de pression portant la caractéristique IDx à un emplacement de montage y lorsque la valeur de probabilité W_IDx_y du module de mesure de pression qui présente la caractéristique IDx est supérieure à un seuil de probabilité W_max et nettement supérieure à toutes les autres valeurs de probabilité calculées.

2. Procédé d'attribution selon la revendication 1, **caractérisé en ce que** les valeurs de probabilité W_IDx_y sont calculées si un compteur de caractéristiques C_IDx a atteint une valeur maximale C_IDmax prédéterminée ou l'a dépassée.

3. Procédé d'attribution selon au moins l'une des revendications 1 et 2, **caractérisé en ce que** le compteur de caractéristiques C_IDx est incrémenté d'une valeur définie si un module de mesure de pression qui présente la caractéristique IDx détecte dans un bandage de roue une pression d'air qui n'atteint pas un seuil, une perte de pression d'air dans le bandage de roue étant conclue lorsque ce seuil n'est plus atteint.

4. Procédé d'attribution selon l'une des revendications 1 et 2, **caractérisé en ce que** l'état d'un compteur C_IDx_y décrit la fréquence à laquelle un module de mesure de pression qui présente la caractéristique IDx est associé à un emplacement de montage y.

5. Procédé d'attribution selon la revendication 4, **caractérisé en ce que** l'état du compteur C_IDx_y est incrémenté d'une première valeur définie lorsqu'exactement un module de mesure de pression qui présente la caractéristique IDx est attribué avec précision à un emplacement de montage y.

6. Procédé d'attribution selon la revendication 4, **caractérisé en ce que** les états de plusieurs compteurs C_IDx_y sont incrémentés d'une deuxième valeur définie si plusieurs modules de mesure de pression qui présentent les caractéristiques IDx respectives sont associés à plusieurs emplacements de montage y.

7. Procédé d'attribution selon au moins l'une des revendications 1 à 6, **caractérisé en ce que** l'emplacement de montage y est détecté par le fait qu'au moins une roue tourne plus rapidement qu'au moins une autre roue.

8. Procédé d'attribution selon au moins l'une des revendications 1 à 7, **caractérisé en ce que** les valeurs de probabilité W_IDx_y sont formées essentiellement par le quotient entre les compteurs C_IDx_y et les compteurs de caractéristiques IDx.

9. Produit de programme informatique, **caractérisé en ce qu'**il définit un algorithme qui comporte un procédé d'attribution selon au moins l'une des revendications 1 à 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926616 C2
- DE 19938431 C2
- DE 10058140 A1
- DE 10152338 A1
- WO 2004058517 A